# EUROPEAN PATENT APPLICATION

(11) **EP 2 589 578 A1**
(43) Date of publication of application: **08.05.2013**
(21) Application number: 11008740.0
(22) Date of filing: 02.11.2011
(51) Int. Cl.: C03C 17/32, C07C 39/08, C09D 5/00, C09D 7/12, D06M 13/152, B82Y 40/00, C09D 201/02, C09D 201/06, C03C 17/28

(54) **A process for preparing a material having hydrophobic and/or oleophobic properties and material thus obtained**

(71) Applicant: Universitat Autònoma de Barcelona, 08193 Bellaterra (Cerdanyola del Vallès) (ES); Consejo Superior De Investigaciones Científicas (CSIC), 28006 Madrid (ES); Fundació Privada Ascamm, Barcelona (ES)
(72) Inventor: Busque Sánchez, Félix, 08225 Terrassa (Barcelona) (ES); Sedó Vegara, Josep, 08750 Molins de Rei (Barcelona) (ES); Garcia Martinez, Beatriz, 08203 Sabadell (Barcelona) (ES); Saiz Poseu, Javier, 08240 Manresa (Barcelona) (ES); Ruiz Molina, Daniel, 08206 Sabadell (Barcelona) (ES)
(74) Representative: Gislon, Gabriele

(57) **Abstract**

Hydrophobic and optionally also oleophobic properties are imparted to substrates by a contacting said substrate with the material obtained by reacting in an alkaline solution at least one catechol of formula : 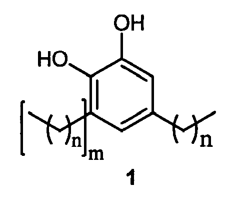 wherein n is 5 to 16; m is 0 or 1 and R is an alkyl chain C₆ to C₁₇, optionally substituted with one or more Fluorine atoms.

## Description

### Background of the invention

The present invention relates to a process for preparing a material having hydrophobic and/or oleophobic properties and material thus obtained. More specifically, the invention relates to a process for preparing a material suitable to impart hydrophobic and possibly also oleophobic properties to a substrate, to the material thus obtained and to the uses of said material.

There is a continuous interest in seeking simple and effective methodologies for preparing surfaces that exhibit both hydro- and/or oleophobic properties.

Wettability is a fundamental property of a solid surface, and is governed by both the chemical composition and the surface topographic microstructure. The chemical composition of the surface determines the surface free energy and has great influence on wettability, but the surface roughness is also an important factor that influences this property. Therefore, in order to obtain high hydrophobic surfaces, many methodologies pursuing low surface free energy and surface microstructure have been developed.

However, most of these methodologies involve thermal, patterning, chemical vapor deposition, enhanced plasma vapor deposition, self-assembly or spin coating techniques, to treat the surface. From a practical, cost-effective, and scalable point of view, such elaborate treatments are usually inadequate. So, there is still challenging to develop methodologies for fabricating materials, from an operationally simple procedure, to obtain both water and oil repellent properties. Nature can be a good source of ideas to design and develop novel functional materials. Thus, coatings bio-inspired on mussel adhesion proteins have already been described, using natural catecholamines as building blocks.

In WO 2008/049108, different catecholamines are used, including the natural amino acid L-dopa, special remark is made on the fact that the substituent chain in the fourth position of the aromatic ring cannot be an unsubstituted alkyl chain, but includes any substituent different from hydrogen.

There is the need to provide an improved process and an improved composition for preparing modified surfaces as above discussed. The aim of this invention is to solve the said problem by means of a process and a material that are easy to prepare and to apply to the surface to be treated.

### Summary of the invention.

The problem was solved by means of the present invention and the process according to claim 1.

The invention also relates to a material according to claim 7, to a process of imparting hydro- and/or oleophobic properties according to claim 12 and to a coated substrate according to claim 17.

Preferred embodiments are disclosed in depending claims.

In the present invention, it is shown that surprisingly and contrary to the teaching of the prior art, catechols with one or two unsubstituted alkyl chain in the aromatic ring according to formula 1, 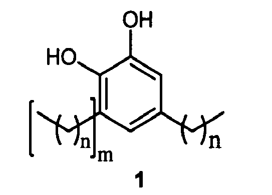 wherein n is 5 to 16; m is 0 or 1, and R is an alkyl chain C₆ to C₁₇ , optionally substituted with one or more Fluorine atoms,
can generate in an alkaline solution a cathecol derived material that confers hydrophobic and oleophobic properties when applied to different kinds of surfaces. The alkaline solution contains ammonia (NH₃) or a source of NH₃; preferably said alkaline solution is an aqueous solution comprising water and an organic polar solvent mixable with water

The material can be obtained in different physical forms, such as vesicles or capsules formed by one or more layers of the material and a hollow interior, or as compact particles. The material can be dissolved in organic solvents to give a solution suitable to impart the required properties to the substrate to be treated. Remarkably, the methodology of application can consist in a simple immersion of the surface to be modified in a solution of the surface-coating compound, but other ways of application of the material to the substrate are possible. Static contact angle measurements of water drops on the treated surfaces have been made in order to characterize their hydrophobicity.

According to preferred embodiments, the starting catechols are selected from the following ones:

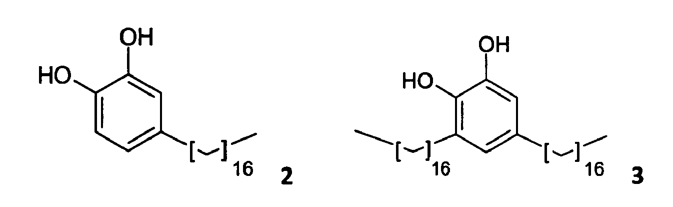

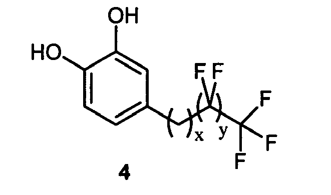

The invention compounds can provide a hydrophobic surface on the selected objects to be treated by simple immersion in a solution containing the invention material.

In a first embodiment the object is immersed in an alkaline solution containing the starting cathecols and is left in said solution during the reaction that gives the resulting cathecol derived material; this process is the so-called procedure *in situ,* consisting in dipping the surface to be modified in an alkaline solution of a catechol according to formula 1 during 2.5 to 3.5 hours. In a second embodiment the cathecol derived material is previously obtained by a reaction of the invention cathecols in the cited alkaline solution and the resulting cathecol-derived material is extracted from the solution: the thus obtained reaction product is used to prepare a solution in which the object to be treated is immersed. This process is called *ex situ* and provides e.g. dipping the substrate to be modified in a solution of the cathecol derived material previously isolated from a solution of a catechol according to formula (2) after standing e.g. 3 hours in a basic solution to provide the cathecol derived material of the invention.

Some of the invention catechols give substantially equivalent results with both in situ and ex situ, other catechols are better performing in one of the processes.

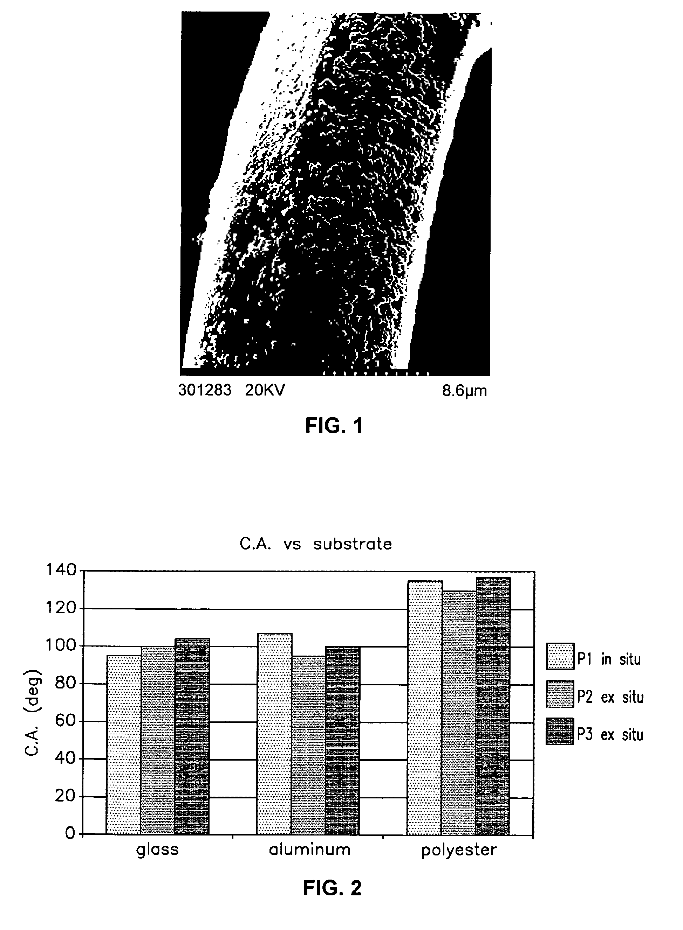

When using as precursor of the surface-coating compound the catechol of formula (2), i.e. a catechol with one unsubstituted C17 alkyl chain in the forth position of the aromatic ring, m = 0, either of the above mentioned two different processes can be used in order to modify the different surfaces. Comparable results are obtained when using the *in situ* and the *ex situ* methodologies, regardless of the material treated (Figure 1) although it has to be noted that the concentration of material used in the *in situ* experiments is 10 fold lower than the concentration employed in the *ex situ* tests.

On the other hand, when using as precursor of the surface-coating compound the catechol of formula 3, with two unsubstituted alkyl chains in the forth and sixth positions of the aromatic ring and n = 16, the methodology *ex situ* gave better results in order to modify the different surfaces.

According to another aspect of the present invention, it was found that catechols with one partially fluorinated alkyl chain in the forth position of aromatic ring according to formula (4), 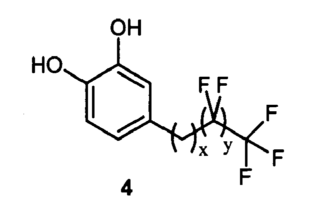 where x is 1 to 3, preferably 3 and y is 5 to 7, preferably 7,
can generate in alkaline solution a surface-coating compound that confers both superhydrophobic and oleophobic features when applied to different kinds of surfaces. Remarkably, the methodology of application consists in a simple few minutes immersion of the surface to be modified in a diluted solution of the surface-coating compound. Static contact angle measurements of water drops on the treated surfaces have been made in order to characterize their hydrophobicity.

The measures referred to in the present invention were carried out on ACA (advancing Contact Angle) e.g. by using norm ASTM D7334-08.

The invention will now be further discussed with reference to the following examples and to the figures attached as a non limiting illustration, in which:
- fig. 1 shows a SEM image ofa polyester fiber treated according to the invention process;
- fig. 2 is a graph showing the values of the contact angles measured on surfaces treated according to the invention;
- fig. 3 shows an electro microscopy image of the capsules of the invention;
- fig. 4 shows a cryoTEM image of a capsule of fig. 3;
- fig. 5 shows three droplets of different nature on a polyester fabric treated according to the invention;
- fig. 6a - e show TEM images of nano-objects treated according to the invention;
- fig. 7 and fig. 8 are the EDS of a nanoparticle of the invention after uptaking of metal ions;
- fig. 9 is a TEM image of iron oxide nanoparticles encapsulated ina a particle of the invention;
- fig. 10 is an image of a nanotube according to the invention.

The process according to the invention provides for treating a substrate with an alkaline solution of a catechol of formula 1 to provide a compound deriving from catechol on the treated surface. It is assumed that the compound is a catechol polymer deriving from the catechol reaction in the alkaline solution, but the word "catechol polymer" in the present description is not intended to restrict the scope of the application to polymers only and can cover oligomers and a compound in any degree of polymerization, that can be obtained by the reaction of a catechol of formula (1) in an alkaline solution. As above mentioned, the alkaline solution comprises NH₃ or a source of NH₃, the solvent comprises water and a water mixable polar organic solvent, preferably an alcohol.

The reaction product, i.e. the cathecol derived material, was found to contain Nitrogen atoms. It is believed, without giving a full explanation of the process, that the starting cathecol molecules are reacted to provide dimers and oligomers with the help of the NH₃ in the solution.

Preferably, the process provides that said at least one catechol is treated in an alkaline solution having pH within the range of 8.0 to 11.0 at a temperature of 30 to 60 for a reaction time of 2 to 24 h, preferably of 2.5 to 3.5 hours, to provide a catechol derived material.

According to a preferred embodiment of the invention, the starting cathecol is first dissolved in the alcohol, such as ethanol or methanol, in an amount in the range of 0.05% to 10% (weight/volume), then to the cathecol solution is added a molar excess of aqueous ammonia or of an aqueous alkaline solution comprising NH₃. The molar excess is in the range of 5 to 100 moles per mole of starting molecule, usually 10 to 100 molar excess.

To prepare the invention cathecol derived material, after the reaction is over, generally after 2 to 24 hours, water is added to the reaction mixture and ammonia and alcohol are removed under vacuum. The remaining water mixture is acidified to pH about 5 and the reaction product is extracted with an organic solvent, e.g. chloroform, not mixable with water. After solvent evaporation a solid resulting product is obtained, that can be used without further purification.

It was found that the reaction product can be in various physical forms and shapes; more particularly, it can be in the shape of vesicles, or capsules, with an empty interior, or in the shape of particles, without a hollow inner part. It was found that the shape of the reaction product, i.e. the cathecol derived material, is dependent on the ratio water/alcohol in the reaction alkaline solution; more specifically, the lower is the amount of water, the greater is the dimension of the hollow interior of the supramolecular structures that are here defined as capsules or vesicles.

In greater detail, it was found that a ratio H₂O/EtOH of 0.2 (by volume, vol/vol) results in the biggest "vesicle" structure, and that a compact particle, with little or no inner space, is obtained when said ratio is 1.5.

When using as precursor of the nanocapsules the catechol 2 with one unsubstituted alkyl chain in the forth position of the aromatic ring and n = 16, m = 0, two approaches can be followed to obtain two clearly differentiated nanostructures.
1. Thick-shell nanocapsules with diameters ranging from 200 to 1000 nm
2. Vesicle-like nanoparticles with diameters ranging around 70 nm

As above mentioned, these two approaches differ in the polarity of the reaction mixture; for lower polarities, the material tends to structure into thick-shell nanoparticles with high mechanical resistance that makes possible their observation even under high vacuum conditions (SEM images in Figure 1a). Upon raising the polarity by increasing the amount of water in the reaction mixture, the material structures into vesicle-like nanoparticles with weaker mechanical resistance, only been observable through the cryoTEM technique.

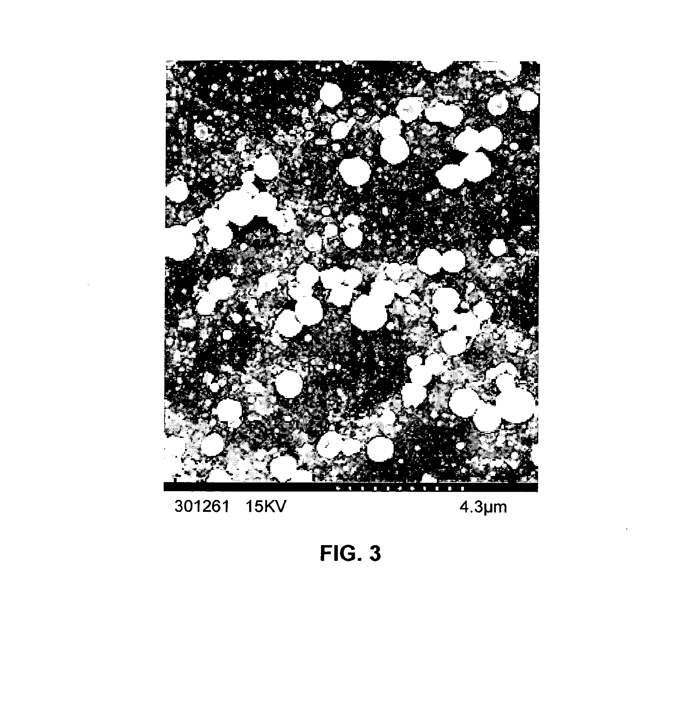

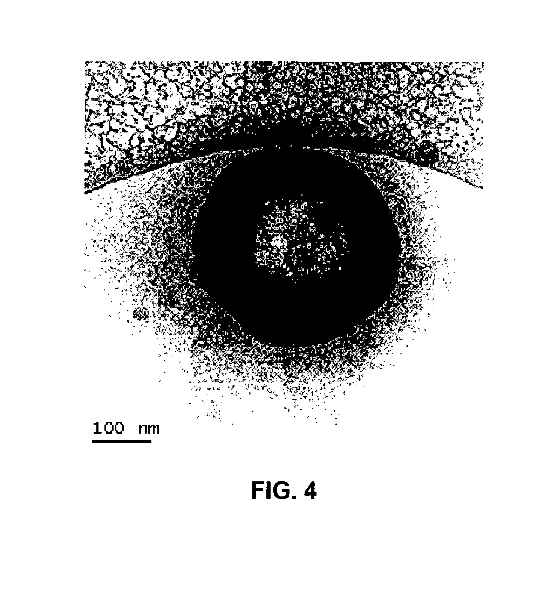

When using as precursor of the nanocapsules the catechol 3 with two unsubstituted alkyl chains in the fourth and sixth positions of the aromatic ring and n = 16, thick-shell nanocapsules with diameters ranging from 240 to 600 nm are obtained (Figure 3). In this case, the mechanical resistance is so strong that the inner hollow can be observed even through TEM (Figure 4).

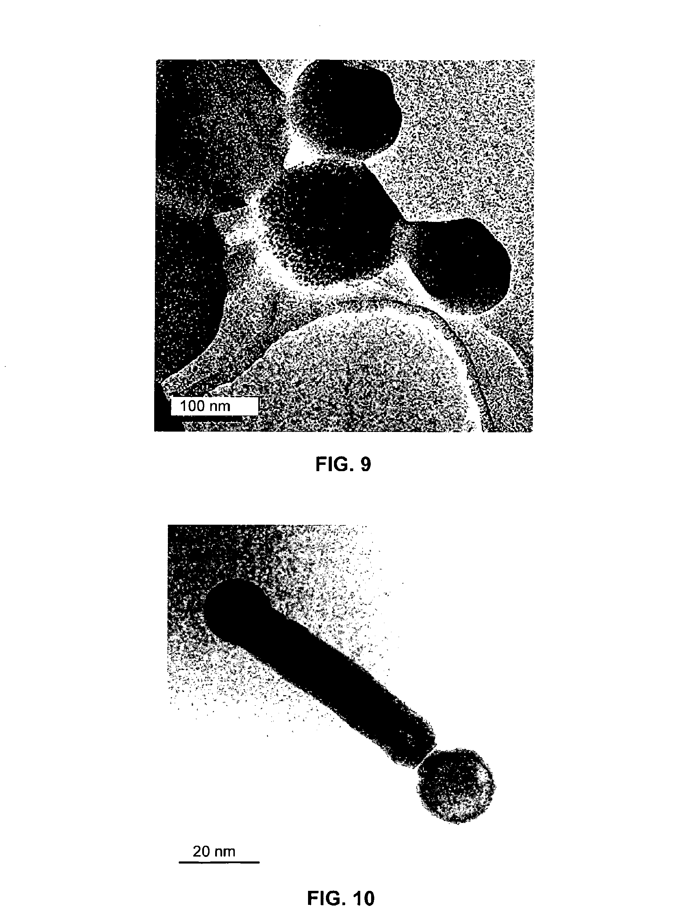

When using as precursor of the nanocapsules the catechol 4 with one partially fluorinated alkyl chain in the forth position of the aromatic ring (see formula 4), thick-shell nanocapsules and also hollow nanotubes are obtained (Figure 10).

In this case, different structures can be observed after the reaction. On one hand, nanocapsules with diameters ranging from 125 to 650 nm exhibiting shells of different thickness and hollows of different diameter can be appreciated. In addition, a second type of structure, which looks like hollow nanotubes with outer diameters close to 200 nm, can be observed.

In the in situ process of treating the substrate, the substrate is immersed in the alkaline solution during the reaction step of the catechol, i.e. the duration of the treatment is substantially the same as the reaction time (e.g. 2.5 to 3.5 hours). According to a preferred embodiment of the invention, the catechol derived material that is obtained from the above mentioned reaction is extracted from the said alkaline solution (see above disclosure) and, when required, is dissolved in a solvent to provide a second solution that is applied to the substrate. In a preferred embodiment the substrate is immersed in the second solution; the immersion time for said substrate is within the range of 30 seconds to 10 minutes.

Preferred concentration ranges of the catechol derived material in the solution of an *ex situ* process is 0.05 to 10 % (w/v), preferably 0.1 to 5.0% (w/v); similar concentration are used in the starting alcohol or organic solvent solution of an *ex situ* process.

Alternatively, the capsules, vesicles or particles of the invention can be adhered to the substrate. In fact it is also proved that the nanocapsules obtained from the treatment of catechols with formula 1 under basic conditions exhibit a highly adherent surface that makes possible their immobilization onto surfaces, as can be seen in Figure 1.

The compounds of formula (1) provide a surface that has hydrophobic properties; these properties can be evaluated by measuring the water contact angle (WCA) e.g. measured as ACA by the norm ASTM D7334-08 . By comparative tests it was found that preferred compounds are those where the length n of the alkyl chain is at least 8 and most preferably at least 12.

In greater detail, as a precursor of the surface-coating compound, the catechol with one unsubstituted alkyl chain in the forth position of the aromatic ring was tested: two different compounds with different lengths of the alkyl chain have been tested, six and seventeen carbon atoms, obtaining in both cases surface-coating compounds that confers hydrophobic features when applied to a glass surface. However, better results are obtained with the longer alkyl chain, with contact angles around 100º, versus the measured when using the six carbon chain, with contact angles around 70º.

As shown in the following examples and in the figures, many different materials can be treated with the surface-coating compound derived from catechols of formula (1), in particular catechols of formula 2 (P2) and 3 (P3), respectively were found particularly useful. Exemplary materials are inorganic materials (glass, sand, CaCO₃, SiO₂, etc...), metals (aluminum, copper, etc...), textile fibers (polyester, cotton, polyamide, polyurethane, etc...).

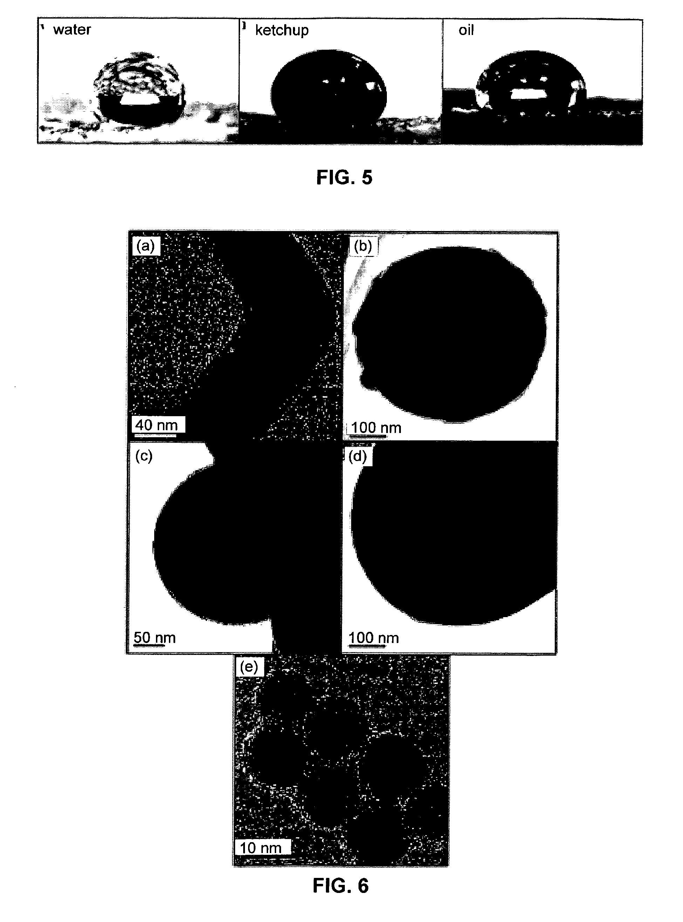

According to the present invention, catechols according to formula 1 can generate in alkaline solution a surface-coating compound that can be used to cover several nanometric materials as polyester fibers, carbon nanotubes and different kind of nanoparticles (iron oxide, cobalt and mesoporous silica). In this case, the *ex situ* methodology is followed using different concentrations of the surface-coating agent in hexane. In all cases TEM (Transmission Electron Microscopy) images of the treated nanometric materials (see e.g. Figures 6a - 6e) demonstrate that they have been efficiently coated.

According to another aspect of the present invention, it was found that catechols with one partially fluorinated alkyl chain in the forth position of aromatic ring according to formula (4), 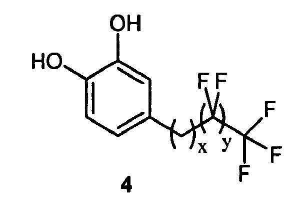 can generate in alkaline solution a surface-coating compound that confers both superhydrophobic and oleophobic features when applied to different kinds of surfaces. Remarkably, the methodology of application consists, as in the *ex situ* application of the above mentioned compounds, in a simple few minutes immersion of the surface to be modified in a diluted solution of the surface-coating compound.

### Experimental

### Example 1- Generation of the surface-coating compound P2

0.5 g of catechol of formula 2 were dissolved in methanol (250 ml, 0.2% w/v) at 40 ºC. Then, a 100 molar excess of ammonia (25% aqueous solution) was added drop wise under magnetic stirring. After 3 hours of reaction, 115 ml of water were added and the excess of ammonia and the methanol were removed by evaporation under reduced pressure. The mixture was treated with drops of concentrated HCl until the pH was slightly acidic (= 5) and then the product was extracted with chloroform and dried over MgSO₄ and concentrated under reduced pressure yielding P2 (495 mg) as a dark brown solid that didn't need further purification.

### Example 2 - Generation of the surface-coating compound P3

0.5 g of catechol of formula 3 were dissolved in methanol (250 ml, 0.2% w/v) at 40 ºC. Then, a 100 molar excess of ammonia (25% aqueous solution) was added drop wise under magnetic stirring. After 3 hours of reaction, 115 ml of water were added and the excess of ammonia and the methanol were removed by evaporation under reduced pressure. The mixture was treated with drops of concentrated HCl until the pH was slightly acidic (≈ 5) and then the product was extracted with chloroform and dried over MgSO₄ and concentrated under reduced pressure yielding P3 (450 mg) as a dark orange solid that didn't need further purification.

### Example 3 - Generation of the surface-coating compound P4

0.25 g of catechol of formula 4 were dissolved in methanol (25 ml, 1% w/v) at 40 ºC. Then, a 100 molar excess of ammonia (25% aqueous solution) was added drop wise under magnetic stirring. After 3 hours of reaction, 10 ml of water were added and the excess of ammonia and the methanol were removed by evaporation under reduced pressure. The mixture was treated with drops of concentrated HCl until the pH was slightly acidic (= 5) and then the product was purified by repetitive cycles of centrifugation/ washing with water. After drying, P4 (200 mg) was yielded as a dark brown solid.

### Example 4 - In situ treatment with P2

The *in situ* treatment was carried out by immersion of a given substrate (only macroscopic objects) in a solution of 10 mg of catechol **2** in methanol (10 ml, 0.1% w/v) at 40 ºC. Then, a 100 molar excess of ammonia was added. After 3 hours, the substrate was moved away from the reaction mixture, rinsed gently with methanol and dried under a nitrogen flow, being ready for their characterization through contact angle measurements.

### Ex situ treatments

### Example 5 - Ex situ treatment with P2

Macroscopic objects, namely textile polyester fabric, glass and aluminum, were treated as follows: an approximately 4 cm² piece of these materials was immersed in a solution of P2 in n-hexane (with concentrations ranging from 0.1% to 5%). After 1 minute, the substrates were moved away from the solution, rinsed gently with methanol and dried under nitrogen flow, being ready for their characterization through contact angle measurements.

Figure 1 shows SEM images of polyester fibers treated *ex situ* with solutions of polymer product P2 as obtained from Example 2 above.

The concentrations were as follows:
(a) Blank polyester.
(b) [p2] = 0.1% (w/v).
(c) [p2] = 1% (w/v).
(d) [p2] = 5% (w/v).

### Example 5a - Ex situ treatment with P2 of nanoscale objects.

Nanoscale objects such as carbon nanotubes, mesoporous silica, iron oxide nanoparticles, cobalt nanoparticles and similar can be treated according to the invention to provide a coating on them as follows. 10 mg of the nanostructures were dispersed in 10 ml of a P2 solution in chloroform (0.1% w/v) under magnetic stirring. After 5 minutes, they were filtered and redispersed in water. Transmission electronic microscopy was used to confirm the presence of the coating surrounding the nanostructures. Figure 3 shows TEM images of nanoobjects treated *ex situ* with P2:
a) Carbon nanotube,
b) iron oxide nanoparticle,
(c) mesoporous silica before and
(d) mesoporous silica after the treatment
(e) cobalt nanoparticles.

The resulting images are shown in fig. 6a - 6e.

### Example 6 - Ex situ treatment with P3 (aluminium, textile fibers, glass)

An approximately 4 cm² piece of these materials was immersed in a solution of P3 in n-hexane (with concentrations ranging from 0.1% to 5%). After 1 minute, the substrates were moved away from the solution, rinsed gently with methanol and dried under nitrogen flow, being ready for their characterization through contact angle measurements.

Figure 2 shows contact angles measured on the surfaces of different materials treated with the surface coating compounds derived from catechol **2** (P2) and catechol **3** (P3).

Concentration of P2 *in situ* methodology: 0.1% (w/v).

Concentration of P2 or P3 *ex situ* methodology: 1% (w/v) in hexane.

P2 *in situ* is shown in the left column of each triplet of columns, P2 *ex situ* is shown in the middle column and P3 *ex situ* is shown on the right end column of each triplet of columns.

### Example 7 - Ex situ treatment with P4

An approximately 4 cm² piece of polyester textile fabric was immersed in a solution of P4 in THF with a concentration of 0.5% (w/v). After 1 minute, the substrates were moved away from the solution, rinsed gently with methanol and dried under nitrogen flow, being ready for their characterization through contact angle measurements.

In all the cases, the *ex situ* procedure for surface treatment has been followed, consisting in dipping the surface to be modified in a solution of a surface-coating compound previously isolated from a solution of a catechol 4 after standing 3 hours in basic media.

After immersion of the surface to be treated, in a 0.5% (w/v) solution in tetrahydrofurane of the surface-coating compound, for a minute, the following contact angles are obtained depending on the material and the nature of the droplet used.

With water droplets: 115º for glass, 150º for polyester.

With oil droplets: 150º for polyester.

Figure 5 shows droplets of different nature on polyester treated *ex situ* with the surface-coating compound obtained from catechol 4.

### Example 8. Synthesis of the nanoparticles obtained from 2.

0.1 g of catechol **2** were dissolved in methanol (50 ml, 0.2% w/v) at 40 ºC. Then, a 100 molar excess of ammonia (25% aqueous solution) was added drop wise under magnetic stirring. After 24 hours of reaction, the ammonia was removed by evaporation under reduced pressure. Then, 25 ml of water were added and the methanol was removed by evaporation under reduced pressure. The nanoparticles were stored as the aqueous dispersion that resulted from the evaporation of the organic solvent.

### Example 9. Synthesis of the nanoparticles obtained from 3.

0.1 g of catechol **3** were dissolved in methanol (100 ml, 0.1% w/v) at 40 ºC. Then, a 100 molar excess of ammonia (25% aqueous solution) was added drop wise under magnetic stirring. After 3 hours of reaction, the ammonia was removed by evaporation under reduced pressure. Then, 50 ml of water were added and the methanol was removed by evaporation under reduced pressure. The nanoparticles were stored as the aqueous dispersion that resulted from the evaporation of the organic solvent.

### Example 10. Synthesis of the nanoparticles obtained from 4.

0.1 g of catechol **4** were dissolved in methanol (50 ml, 0.2% w/v) at 40 ºC. Then, a 100 molar excess of ammonia (25% aqueous solution) was added drop wise under magnetic stirring. After 24 hours of reaction, the ammonia was removed by evaporation under reduced pressure. Then, 25 ml of water were added and the methanol was removed by evaporation under reduced pressure. The nanoparticles were stored as the aqueous dispersion that resulted from the evaporation of the organic solvent.

### Encapsulation Examples

Encapsulation ability was determined by treating different particles with the capsules-vesicles of the invention. The nanocapsules obtained from the treatment of catechols with formula 1 under basic conditions have been proved to have potential applications as encapsulating agents of both inorganic nanoparticles and molecules. In Figure 9, TEM images of the encapsulation of iron oxide nanoparticles inside nanocapsules obtained from catechol 2 (example 11) are shown.

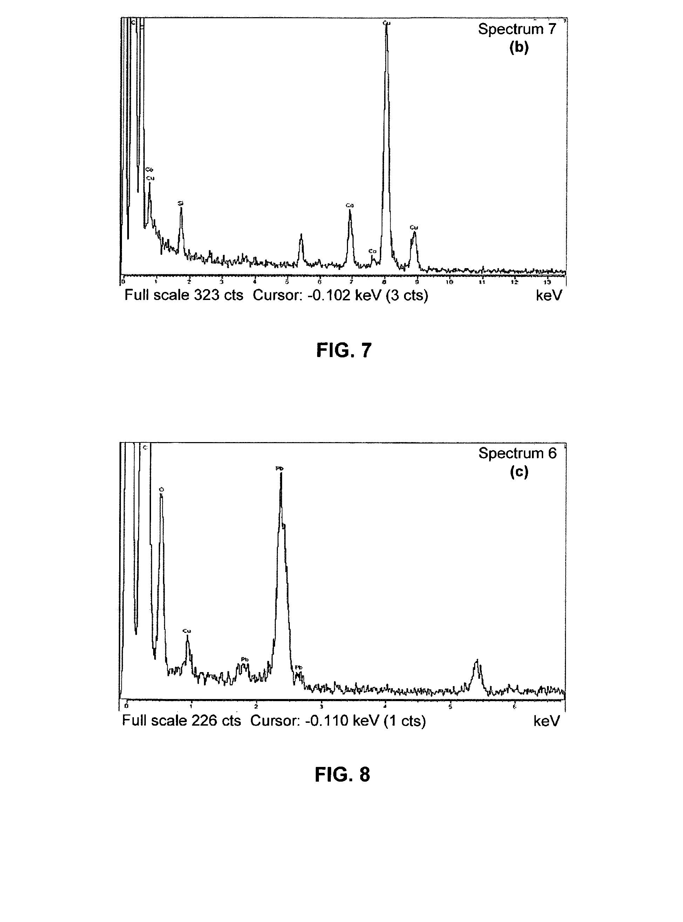

The nanocapsules obtained from the treatment of catechols with formula 1 under basic conditions have been proved to have potential applications as metal scavenging agents. Upon mixing the aqueous dispersion of these nanocapsules with a solution of certain metal ions, their sequestration takes place. The metallic species remain retained within the nanocapsules matrix, as can be seen by EDS measurements (example 13, Figure 7 and 8). In addition, TEM shows that this process doesn't induce significant modifications of their structures.

Therefore, the invention material can be also used to bind molecules, metal particles and metal ions, both inside and outside the supramolecular capsule or vesicles.

### Example 11. Encapsulation of iron oxide nanoparticles

10 mg of catechol 2 were dissolved in methanol (1 ml) at 40 ºC. A dispersion consisting in 10 mg of iron oxide nanoparticles in 4 ml of methanol was added to the starting catechol solution (which reached a final concentration of 0.2%, w/v). Then, a 100 molar excess of ammonia (25% aqueous solution) was added drop wise under magnetic stirring. After 24 hours of reaction, methanol and ammonia were removed under reduced pressure, and the resulting aqueous dispersion was filtered and washed several times with water to remove the non-encapsulated iron oxide nanoparticles. The catechol **2** nanoparticles retained in the filter were redispersed in water by sonication during 30 seconds.

### Example 12. Encapsulation of nile blue

50 mg of catechol **4** and 10 mg of nile blue were dissolved in methanol (25 ml) at 40 ºC. Then, a 100 molar excess of ammonia (25% aqueous solution) dissolved in 18 ml of water were added drop wise under magnetic stirring. After 24 hours of reaction, methanol and ammonia were removed under reduced pressure, and the resulting aqueous dispersion was filtered and washed several times with water to remove the excess of non-encapsulated nile blue. The catechol **4** nanoparticles retained in the filter were dried and stored until later measurements.

### Example 13. Metal scavenging experiments with nanoparticles obtained from catechol 2. Encapsulation of Co and Pb ions.

100 µl of a 2 M aqueous solution of the corresponding metal nitrate were added to **1** ml of the aqueous dispersion resulted from the synthesis of nanoparticles of catechol **2**. The mixture was stirred for 1 hour and then the system was allowed to evolve without stirring overnight. The dispersions were filtered under vacuum through a 200 nm nylon filter and washed with miliQ water (10 ml x 3). The nanoparticles retained in the filter were redispersed in 5 ml of water through sonication during 30 seconds.

EDS of a nanoparticle obtained from catechol **2** after the uptake of Co is shown in Fig. 7 and the EDS of a nanoparticle obtained from catechol **2** after the uptake of Pb is shown in fig. 8.

## Claims

1. A process for producing a material suitable for imparting hydrophobic and/or oleophobic properties to a substrate, the process comprising a step of treating a solution of at least one catechol of formula : 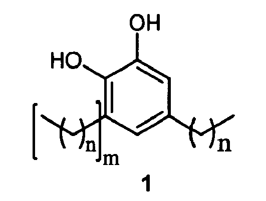 wherein n is 5 to 16; m is 0 or 1 and R is an alkyl chain C₆ to C₁₇, optionally substituted with one or more Fluorine atoms,
with an alkaline solution comprising NH₃ or a source of Nh₃, said at least one catechol reacting to produce a catechol derived material.

2. The process of claim 1, wherein said catechol is selected from the following compounds:

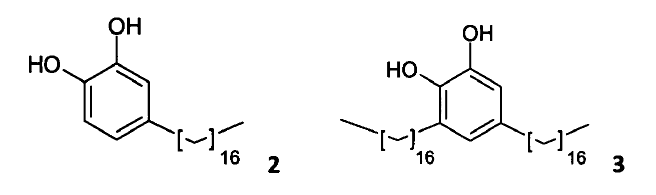

3. The process of claim 1, wherein R said catechol is : 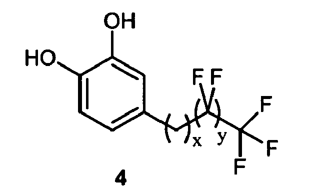 where x is 1 to 3, preferably 3 and y is 5 to 7, preferably 7.

4. The process according to any previous claim, wherein said at least one catechol is dissolved in an alkaline solution having pH within the range of 8.0 to 11.0 at a temperature of 30 to 60 for a reaction time of 3 to 24 h, preferably of 2.5 to 3.5 hours, to provide a catechol derived material.

5. The process according to any claim 1 to 4, wherein said alkaline solution is an aqueous solution comprising water and an organic polar solvent mixable with water.

6. The process according to any previous claim, wherein said alkaline solution is added to said catechol solution to provide a molar excess of ammonia.

7. A catechol derived material for imparting hydrophobic and oleophobic properties to a substrate, comprising at least one catechol of formula : 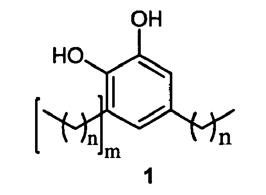 wherein n is 5 to 16; m is 0 or 1 and R is an alkyl chain C6 to C17, optionally substituted with one or more fluorine atoms as obtainable with a process according to any claim 1 to 5.

8. A catechol derived material as obtainable from a process according to any claim 1 to 7, wherein said catechol is selected from the following compounds: 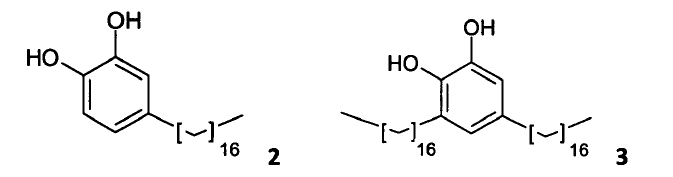 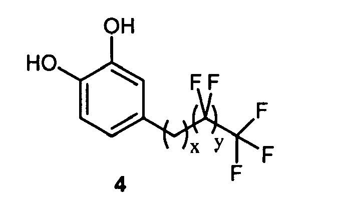 where x is 1 to 3, preferably 3 and y is 5 to 7, preferably 7.

9. A catechol derived material according to any of the claims 7 or 8, wherein said material is in the form of particles, capsules or vesicles, said particles capsules or vesicles preferably having a dimension between 5 µm and 1 nm, preferably 70 to 1000 nanometers.

10. A catechol derived product according to any claim 7 to 9, wherein said material comprises Nitrogen atoms.

11. A catechol derived product according to any claim 7 to 10, wherein said material is fluorescent.

12. A process for imparting hydrophobic and/or oleophobic properties to a substrate, the process comprising treating a substrate with a catechol derived material according to any of the claims 7 to 11.

13. A process according to claim 12, wherein said catechol derived material is dissolved in a solvent to provide a solution, and wherein the thus obtained solution is applied to a substrate to be coated by said dissolved catechol derived compound.

14. The process according to claim 13, wherein said solvent is selected from nonpolar or polar aprotic solvents such as hexane, chloroform or mixtures thereof and the immersion time for said substrate is within the range of 30 seconds to 10 minutes.

15. A process according to claim 12, wherein said catechol derived compound is applied to said substrate in the form of a dispersion, preferably of particles, capsules or vesicles, most preferably in the reaction media.

16. The use of a cathecol derived material according to any claim 7 to 11 or of a substrate comprising said material, to bind metal ions.

17. A coated substrate as obtainable according to any of the claims 12 to 16.
